# EUROPÄISCHE PATENTANMELDUNG

(11) **EP 4 336 341 A1**
(43) Veröffentlichungstag der Anmeldung: **13.03.2024**
(21) Anmeldenummer: 23194240.0
(22) Anmeldetag: 30.08.2023
(51) Int. Cl.: G06F 3/14

(54) **GERÄT MIT E-INK DISPLAY**

(30) Priorität: 07.09.2022 DE 102022122716
(71) Anmelder: Murrelektronik GmbH, 71570 Oppenweiler (DE)
(72) Erfinder: Ruf, Henrik, 71570 Oppenweiler (DE); Wolff, Ingo, 71570 Oppenweiler (DE)
(74) Vertreter: Prinz & Partner mbB

(57) **Zusammenfassung**

Die Erfindung betrifft ein Gerät (10) mit zumindest einem Speicher (20), einem Prozessor (18) und einem E-Ink Display (24, 26), wobei der Prozessor (18) dazu ausgebildet und eingerichtet ist, Serviceinformationen aus dem Speicher (20) auszulesen, einen maschinenlesbaren Code (34) basierend auf den Serviceinformationen zu erzeugen und den maschinenlesbaren Code (34) an das E-Ink Display (24) zu übermitteln, sodass das E-Ink Display (24) den maschinenlesbaren Code (34) anzeigt, der, wenn er mit einem Endgerät (36) gelesen wird, das Endgerät (36) dazu veranlasst, die Serviceinformationen abzurufen. Ferner betrifft die Erfindung ein Verfahren zum Betreiben eines Geräts (10) mit einem E-Ink Display (24, 26).

## Beschreibung

Die Erfindung betrifft ein Gerät mit einem E-Ink Display sowie ein Verfahren zum Betreiben eines Geräts mit einem E-Ink Display.

Maschinen und Anlagen werden heutzutage zumeist computergestützt entworfen, insbesondere mittels eines Konstruktionsprogramms, was auch als CAD-Software bezeichnet wird. Während der Planungsphase entstehen digitale Abbilder einer realen Maschine oder Anlage als Satz an Zeichnungen, Stücklisten sowie weiteren Daten. Während der Maschinenkonstruktion werden zumeist einzelne Komponenten der Maschine oder Anlage beschriftet. Diese Beschriftung verbleibt häufig über den gesamten Lebenszyklus an der jeweiligen Komponente. Die Beschriftung kann hierbei verschiedene Informationen tragen, beispielsweise eine Bezeichnung der Komponente, welche eine Referenz zu den übrigen Unterlagen herstellt.

Insbesondere für Wartungspersonal kann es vorteilhaft sein, auf eine solche Beschriftung zuzugreifen, um eine Referenz zwischen der realen Komponente und dem Unterlagensatz herstellen zu können und/oder um an Serviceinformationen über die Komponente zu gelangen.

In der Regel werden zur Beschriftung der Komponenten Beschriftungsschilder verwendet. Diese können händisch oder mit speziellen Druckern beschriftet sein. Auch kann die Beschriftung direkt auf die jeweiligen Komponenten aufgebracht sein, beispielsweise eingeprägt bzw. aufgedruckt, sodass diese unveränderlich ist.

Diese Art der Beschriftung der Komponente ist aufwendig und somit kostspielig. Außerdem kann es beim Austausch oder Update von Komponenten zu Fehlern kommen. Wird beispielsweise eine neue Softwareversion auf die Komponente aufgespielt und die Beschriftung nicht angepasst, kann dies zu Fehlern oder zumindest gesteigertem Aufwand bei zukünftigen Wartungsarbeiten führen.

Die Aufgabe der Erfindung ist es, die aus dem Stand der Technik bekannten Nachteile in einfacher und kostengünstiger Weise zu beheben.

Die Aufgabe wird erfindungsgemäß gelöst durch ein Gerät mit zumindest einem Speicher, einem Prozessor und einem E-Ink Display, wobei der Prozessor dazu ausgebildet und eingerichtet ist, Serviceinformationen aus dem Speicher auszulesen, einen maschinenlesbaren Code basierend auf den Serviceinformationen zu erzeugen und den maschinenlesbaren Code an das E-Ink Display zu übermitteln, sodass das E-Ink Display den maschinenlesbaren Code anzeigt. Wenn der maschinenlesbare Code mit einem Endgerät gelesen wird, wird dieses dazu veranlasst, die Serviceinformationen abzurufen.

Unter dem Begriff "abrufen" wird in diesem Zusammenhang verstanden, dass das Endgerät die Serviceinformationen erhält. Dies kann dadurch geschehen, dass die Serviceinformationen direkt im maschinenlesbaren Code enthalten sind, vom Endgerät gelesen und decodiert werden. Alternativ kann das Lesen des maschinenlesbaren Codes das Endgerät dazu veranlassen, eine Schnittstelle freizugeben und/oder einen Link zu öffnen, über welchen die Serviceinformationen auf das Endgerät gelangen. Anschließend kann der Inhalt der Serviceinformationen durch das Endgerät angezeigt werden.

Unter dem Begriff "Serviceinformationen" werden verschiedene Informationen über das Gerät verstanden, insbesondere solche, die Im Wartungsfall vom Wartungspersonal zur Wartung benötigt werden. Hierzu gehören ausführliche Informationen zum Gerät, seinem Betriebszustand und seinem technischen Zustand. Nicht abschließende Beispiele für Serviceinformationen sind die Benennung des Geräts, sein Einsatzort, sein Soft- und Hardwarestand, seine Konfiguration, sein technischer Zustand ("health status"), Adressinformationen und/oder Verfolgbarkeitsdaten ("traceability data") des Geräts, beispielsweise das Produktionsdatum oder die Seriennummer.

Der Grundgedanke der Erfindung ist es, Serviceinformationen, welche ein Gerät bzw. eine Komponente betreffen, über ein Display abrufbar zu machen, sodass ein Endgerät die Serviceinformationen erhalten kann. Hierzu wird der maschinenlesbare Code angezeigt. Der maschinenlesbare Code ist für einen Menschen nicht verständlich, sodass ein Mensch die Serviceinformationen nicht aufgrund des maschinenlesbaren Codes direkt erfassen kann.

Herkömmliche Displays eignen sich für die Anzeige des maschinenlesbaren Codes jedoch nicht, da sie diesen nur im eingeschalteten Zustand anzeigen können. Die über den maschinenlesbaren Code abrufbaren Serviceinformationen sind aber gerade im Servicefall wichtig, also in einer Situation, in der die Anlage oder Maschine zumeist ausgeschaltet ist, bspw. aufgrund eines Defekts.

Im Gegensatz zu herkömmlichen Displays kann ein E-Ink Display die Informationen auch dann anzeigen, wenn gerade keine elektrische Energie verfügbar ist, also auch im Falle eines Defekts.

Da die vorhandene Fläche für derartige Beschriftungszwecke, insbesondere für das E-Ink Display auf dem Gerät, zumeist begrenzt ist, aber das Servicepersonal häufig eine Vielzahl von Informationen zur Wartung benötigt, ist ein maschinenlesbarer Code vorgesehen, mittels dem die Informationen abgerufen und so dem Servicepersonal technisch einfach zur Verfügung gestellt werden können. Hierzu wird der maschinenlesbare Code mittels des Endgeräts erfasst bzw. gelesen, um an die Vielzahl der Informationen zur Wartung trotz des geringeren Platzes zu gelangen.

Das Endgerät kann beispielsweise ein portabler Computer und/oder ein Smartphone sein. Bei dem maschinenlesbaren Code kann es sich insbesondere um einen optisch erfassbaren Code wie einen QR-Code, einen Strichcode oder Ähnliches handeln.

Ein weiterer Vorteil, welcher durch das E-Ink Display in Kombination mit dem maschinenlesbaren Code erzielt wird, liegt darin, die Informationen auf einfache Weise und beliebig oft elektronisch anpassen und/oder verändern zu können, beispielsweise wenn das Gerät oder eine Gerätesoftware aktualisiert wird. Die bereitgestellten Informationen sind also nicht statisch, wie dies der Fall ist, wenn das Gerät mit einer Prägung oder einem Aufdruck versehen wäre.

Gemäß einem Aspekt der Erfindung können die Serviceinformationen Daten über eine Softwareversion und/oder über eine Konfiguration und/oder über eine Betriebszeit und/oder über ein Herstellungsdatum des Geräts und/oder über einen am Gerät aufgetretenen Fehler umfassen. Bezüglich dem letztgenannten Aspekt kann auch vorgesehen sein, dass das Gerät dazu ausgebildet ist, bei einer fehlerbedingten Abschaltung, beispielsweise aufgrund einer Unterspannung, Fehlerinformationen beim Abschaltvorgang abzuspeichern und/oder über das E-Ink Display mittels des maschinenlesbaren Codes auszugeben. Es hat sich gezeigt, dass gerade diese Daten im Servicefall für das Wartungspersonal besonders wichtig sind. Durch das Abrufen des maschinenlesbaren Codes kann Zeit eingespart werden, welche sonst benötigt würde, um die Informationen anderweitig zu beschaffen.

In einer bevorzugten Ausführungsform ist der Prozessor dazu ausgebildet und eingerichtet, den maschinenlesbaren Code zeitlich begrenzt über das E-Ink Display anzuzeigen. Hierdurch kann eine zeitlich begrenzte Zugriffsmöglichkeit auf die Serviceinformationen geschaffen werden. So wird sichergestellt, dass nur berechtigte Nutzer in einem bestimmten Zeitraum einen Zugriff auf die Serviceinformationen erhalten, was die Datensicherheit im Allgemeinen erhöht.

Ferner ist auch denkbar, dass der maschinenlesbare Code derart ausgestaltet und/oder verschlüsselt ist, dass nur berechtigte Nutzer, welche über eine entsprechende Lesetechnologie und/oder Entschlüsselungstechnologie verfügen, die Serviceinformationen abrufen können. Dies trägt ebenfalls der Datensicherheit bei. Auch kann der maschinenlesbare Code derart ausgebildet sein, dass ein Passwort eingegeben werden muss, um Zugriff auf die Serviceinformationen zu erhalten. Ebenso kann im Endgerät eine Entschlüsselungssoftware vorgesehen sein, die die verschlüsselten Serviceinformationen entschlüsselt.

Ein weiterer Aspekt der Erfindung sieht vor, dass das Gerät eine digitale Kommunikationseinheit aufweist. Wenn der maschinenlesbare Code mit dem Endgerät gelesen wird, wird dieses dazu veranlasst, eine Verbindung über eine Schnittstelle mit der digitale Kommunikationseinheit herzustellen. Bei der Schnittstelle kann es sich beispielsweise um eine Schnittstelle für eine Wifi-, Bluetooth- oder sonstige, vorzugsweise kabellose, Verbindung handeln. Über die Schnittstelle können die Serviceinformationen, Software und/oder sonstige Daten technisch einfach zwischen dem Gerät und dem Endgerät übertragen werden.

Alternativ oder zusätzlich ist auch eine Kommunikation des Gerätes mit dem Endgerät und/oder mit weiteren Komponenten über einen Feldbus denkbar. Über diesen können beispielsweise Informationen an den Prozessor und/oder an das E-Ink Display übertragen werden.

Um die Datensicherheit weiter zu erhöhen, ist denkbar, dass die Kommunikationseinheit dazu ausgebildet und eingerichtet ist, die Verbindung zeitlich begrenzt aufrechtzuerhalten.

Zudem kann das Gerät derart ausgebildet sein, dass die Verbindung auch im stromlosen bzw. spannungsfreien Zustand des Geräts hergestellt wird. Hierzu kann das Endgerät über die Schnittstelle Energie zur Verfügung stellen, beispielsweise induktiv, um die Verbindung aufzubauen.

Die Kommunikationseinheit kann insbesondere eine Nahfeldkommunikationseinheit sein. Wenn das Endgerät den maschinenlesbaren Code liest, wird es dazu veranlasst, Serviceinformationen und/oder eine Software und/oder eine Konfiguration mittels der Nahfeldkommunikationseinheit von dem Speicher an das Endgerät und/oder von dem Endgerät an den Speicher zu übertragen. So können technisch einfach auch größere Datenmengen übertragen werden. Beispielsweise kann mittels der Nahfeldkommunikationseinheit ein Softwareupdate für das Gerät und/oder ein Anzeigenupdate für das Ink-Display vom Endgerät in den Speicher übertragen werden. Umgekehrt kann beispielsweise auch Software vom Gerät auf das Endgerät und von dort aus auf ein Austauschgerät übertragen werden. So kann das Gerät im Falle eines Defekts einfach durch das entsprechend angepasste Austauschgerät ausgetauscht werden.

Es kann ferner vorgesehen sein, dass der Prozessor dazu ausgebildet und eingerichtet ist, zumindest einen Teil der Serviceinformationen, insbesondere eine Softwareversion und/oder eine Konfiguration und/oder eine Anschlussbeschriftung und/oder Betriebszeitinformationen und/oder Fehlerinformationen und/oder einen letzten manuellen Zugriff menschenlesbar über das E-Ink Display auszugeben.

So kann beispielsweise das Wartungspersonal einfach feststellen, ob eine Wartung notwendig ist und/oder ob für das Gerät eine Wartung vorgesehen ist, ohne hierfür den maschinenlesbaren Code scannen zu müssen, also mittels des Endgeräts zu lesen.

Die Betriebszeitinformationen können beispielsweise in Form eines Balkens auf dem E-Ink Display dargestellt sein. Bei Geräten, bei denen die maximale Laufzeit vorgesehen und/oder bekannt ist, lässt sich somit eine Vorhersage des voraussichtlichen Ausfalls generieren und visuell einfach erfassbar anzeigen.

Ferner ist auch denkbar, dass weitere Informationen in Textform angezeigt werden, insbesondere solche Informationen, die das Gerät für das Servicepersonal identifizieren. Hierzu gehören z.B. IP-Adressen, Safety Adressen und/oder ein Freitext zur Beschreibung des Geräts.

Alternativ oder zusätzlich kann auch eine Adresse zu einer digitalen Instanz oder zu einem Type Zwilling angezeigt werden, insbesondere in Form eines QR Codes.

Zudem wird die Aufgabe durch ein Verfahren zum Betreiben eines Geräts mit zumindest einem Speicher, einem Prozessor und einem E-Ink Display gelöst, das die folgenden Schritte aufweist:
- Auslesen von Serviceinformationen aus dem Speicher mittels des Prozessors,
- Erzeugen eines maschinenlesbaren Codes mittels des Prozessors basierend auf den Serviceinformationen,
- Übermitteln des maschinenlesbaren Codes an das E-Ink Display,
- Anzeigen eines maschinenlesbaren Codes auf dem E-Ink Display;
- Lesen des maschinenlesbaren Codes mittels eines Endgerätes, wobei das Endgerät durch das Lesen die Serviceinformationen erhält und/oder dazu veranlasst wird, die Serviceinformationen abzurufen.

Die Vorteile und Eigenschaften, die vorstehend bereits zum erfindungsgemäßen Gerät diskutiert wurden, gelten selbstverständlich auch für das erfindungsgemäße Verfahren in entsprechender Weise.

In einer Ausführungsform wird das Endgerät durch Lesen des maschinenlesbaren Codes dazu veranlasst, die abgerufenen Serviceinformationen auszugeben, insbesondere auf einem Bildschirm anzuzeigen. Dadurch werden die Serviceinformationen einem Nutzer, beispielsweise dem Wartungspersonal, einfach zugänglich gemacht.

Alternativ oder zusätzlich kann das Endgerät durch Lesen des maschinenlesbaren Codes dazu veranlasst werden, eine auf dem Gerät befindliche Software und/oder eine Konfiguration und/oder die abgerufenen Serviceinformationen zu kopieren, insbesondere auf ein Austauschgerät. So kann im Falle eines Defekts ein Austauschgerät vergleichsweise einfach eingerichtet werden, sodass das defekte Gerät ausgetauscht werden kann, also durch ein bereits eingerichtetes Gerät ersetzt werden kann. Dies verringert den Wartungsaufwand sowie die zur Wartung benötigte Zeit. Insbesondere wird eine Ausfallzeit eines übergeordneten Systems vermieden oder zumindest minimiert, da direkt ein Ersatzgerät im eingerichteten und konfigurierten Zustand zur Verfügung gestellt werden kann.

Die Serviceinformationen, welche vom Endgerät abgerufen werden, können dabei vom Gerät selbst und/oder aus einer externen Serverstruktur, beispielsweise einer Cloud, abgerufen werden. Der Abruf vom Gerät selbst hat den Vorteil, dass keine externe Verbindung des Endgerätes notwendig ist. Dagegen ist beim Abrufen von der externen Serverstruktur vorteilhaft, dass die Serviceinformationen auch ohne elektrische Energieversorgung und/oder funktionsfähigen Speicher des gegebenenfalls defekten Geräts abgerufen werden können.

Es kann auch vorgesehen sein, dass der maschinenlesbare Code, wenn er mit dem Endgerät gelesen wird, das Endgerät dazu veranlasst, einen digitalen Zwilling des Geräts abzurufen und/oder anzuzeigen, beispielsweise durch Öffnen einer URL. Bei dem digitalen Zwilling kann es sich insbesondere um eine standardisierte digitale Repräsentation des Geräts handeln, beispielsweise eine sogenannte "Admin Administration Shell" (AAS). Durch den digitalen Zwilling erhält das Wartungspersonal eine Vielzahl an Informationen, mittels derer beispielsweise eine Kompatibilität des Geräts mit neuer Software und/oder anderen Komponenten geprüft werden kann. So lassen sich bei der Wartung Probleme frühzeitig erkennen und/oder verhindern.

Im Falle, dass das Gerät ein Bestandteil einer Maschine oder Anlage ist, kann der digitale Zwilling bzw. dessen Adressinformation beim Austausch oder Update des Geräts dazu genutzt werden, eine digitale Version der Maschine oder Anlage ebenfalls zu aktualisieren. Hierzu können beispielsweise die maschinenlesbaren Codes des defekten Geräts sowie eines Austauschgeräts gescannt werden, wodurch eine Zuordnung des Geräts mit dem Austauschgerät hergestellt wird. Dies verringert die Gefahr von Inkonsistenz zwischen realen Maschine und/oder Anlage und ihrem digitalen Abbild.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische dreidimensionale Darstellung eines Ausführungsbeispiels eines erfindungsgemäßen Geräts; und
- Fig. 2 eine schematische Darstellung eines erfindungsgemäßen Verfahrens.

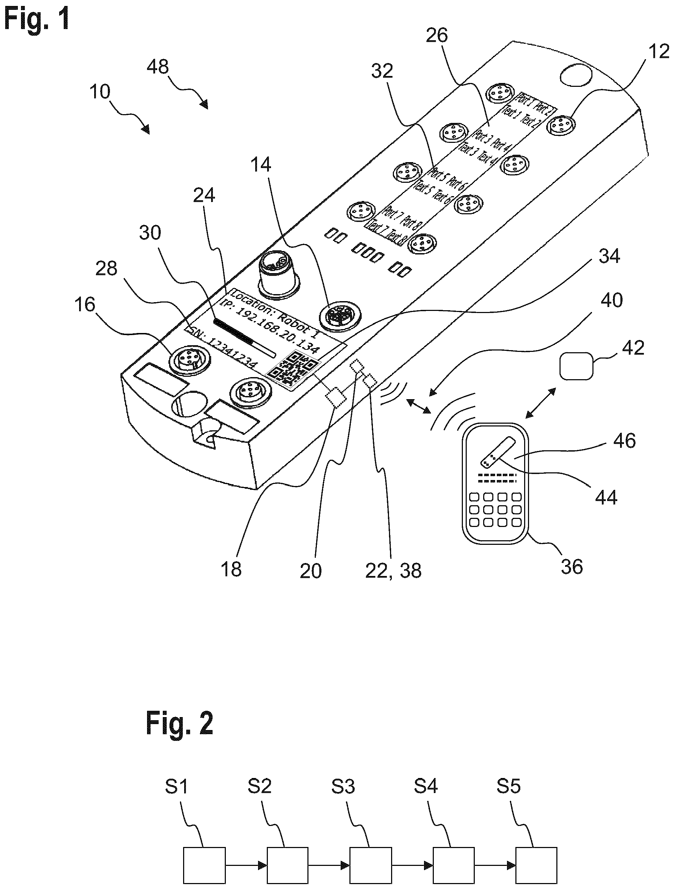

In Figur 1 ist eine schematische dreidimensionale Darstellung eines erfindungsgemäßen Geräts 10 gezeigt. Das Gerät 10 ist ein IO-Link Master, welcher im Ausführungsbeispiel einen zentralen Bestandteil eines IO-Link Systems (nicht gezeigt) bildet.

Das Gerät 10 weist eine Mehrzahl an Anschlüssen 12 zum Anschließen von IO-Link Devices (nicht gezeigt) auf. Ferner umfasst das Gerät 10 Versorgunganschlüsse 14, insbesondere zur Versorgung mit elektrischer Energie, sowie Kommunikationsanschlüsse 16, beispielsweise einen Feldbusanschluss.

Außerdem weist das Gerät 10 einen Prozessor 18, einen Speicher 20 sowie eine digitale Kommunikationseinheit 22 auf, die innerhalb eines Gehäuses des Geräts 10 vorgesehen sind.

Des Weiteren weist das Gerät 10 ein erstes E-Ink Display 24 und ein zweites E-Ink Display 26 auf, die von außen zugänglich am Gehäuse angeordnet sind, sodass die Displays 24, 26 von außen zugänglich sind.

In dem Speicher 20 sind Serviceinformationen gespeichert. Insbesondere kann es sich bei dem Speicher 20 um einen nicht flüchtigen Speicher handeln, sodass die Serviceinformationen nicht verloren gehen, wenn beispielsweise aufgrund eines Defekts und/oder einer Abschaltung dem Gerät 10 keine elektrische Energie zur Verfügung steht.

Im Ausführungsbeispiel umfassen die Serviceinformationen eine Vielzahl von Daten, insbesondere über eine Seriennummer 28 des Geräts 10 ("S/N"), über eine Version sowie Konfiguration einer Betriebssoftware des Geräts 10, über ein Herstellungsdatum des Geräts 10, über eine Betriebsdauer des Geräts 10, über eine letzte Wartung des Geräts 10, über an dem Gerät 10 angeschlossene IO-Link Devices, über am Gerät 10 zuvor aufgetretene Fehler, sowie über Adressen, durch welche weiterführend Informationen über das Gerät 10 bezogen werden können.

Der Prozessor 18 ist dazu ausgebildet und eingerichtet, einen Teil der Serviceinformationen menschenlesbar über eines der E-Ink Displays 24, 26 auszugeben.

Wie in Figur 1 dargestellt, werden auf dem ersten E-Ink Display 24 Informationen über die Seriennummer 28 angezeigt. Die Betriebsdauer wird in Form eines Balkens 30 wiedergegeben.

Auf dem zweiten E-Ink Display 26 wird mittels Anschlussbeschriftungen 32 angezeigt, welche IO-Link Devices mit den jeweiligen Anschlüssen 12 verbunden sind. Die Anschlussbeschriftungen 32 stellen dabei ebenfalls Serviceinformationen im Sinne der Erfindung dar.

Durch die menschenlesbaren Ausgaben können Nutzer, insbesondere das Wartungspersonal, schnell und einfach relevante Informationen erfassen und so besser abschätzen, ob bzw. wann eine Wartung oder ein Austausch des Geräts 10 notwendig ist und wie im Wartungsfall vorzugehen ist, beispielsweise wie das Gerät 10 nach der Wartung wieder anzuschließen ist.

Ferner ist der Prozessor 18 dazu ausgebildet und eingerichtet, die Serviceinformationen aus dem Speicher 20 auszulesen, einen maschinenlesbaren Code 34 basierend auf zumindest einem Teil der Serviceinformationen zu erzeugen und den maschinenlesbaren Code 34 an das erste E-Ink Display 24 zu übermitteln, sodass dieses den maschinenlesbaren Code 34 anzeigt.

Im Ausführungsbeispiel ist der maschinenlesbare Code 34 ein QR-Code. Selbstverständlich ist dies nicht einschränkend zu verstehen. Andere Arten von maschinenlesbaren Codes 34 sind ebenfalls denkbar, beispielsweise Strichcodes.

Der maschinenlesbare Code 34 ist derart ausbildet, dass er ein Endgerät 36, beispielsweise ein Computer oder Smartphone, dazu veranlasst, die Serviceinformationen abzurufen, wenn er von diesem gelesen bzw. gescannt wird. Das Abrufen kann insbesondere mittels der Kommunikationseinheit 22 des Geräts 10 erfolgen.

Im Ausführungsbeispiel ist die Kommunikationseinheit 22 eine Nahfeldkommunikationseinheit 38.

Durch das Lesen des maschinenlesbaren Codes 34 wird das Endgerät 36 dazu veranlasst, eine Verbindung 40 mit dem Gerät 10 herzustellen, beispielsweise mit der Kommunikationseinheit 22 des Geräts 10, und über diese Verbindung 40 die Serviceinformationen aus dem Speicher 20 auszulesen. Das Endgerät 36 weist hierzu eine entsprechende Schnittstelle auf, die beispielsweise mit der Kommunikationseinheit 22 des Geräts 10 kommunizieren kann.

Über die Verbindung 40 können auch die Betriebssoftware und/oder Konfigurationsdaten an das Endgerät 36 übertragen bzw. auf dieses kopiert werden.

Auch ein umgekehrter Datentransfer vom Endgerät 36 zum Gerät 10 mittels der Verbindung 40 ist möglich. So können bei einer Wartung beispielsweise die Serviceinformationen des Gerätes 10 aktualisiert und in dessen Speicher 20 abgelegt werden. Es kann also eine unidirektionale Verbindung 40 in eine beliebige Richtung oder eine bidirektionale Verbindung 40 vorliegen.

Alternativ oder zusätzlich kann das Lesen des maschinenlesbaren Codes 34 das Endgerät 36 auch dazu veranlassen, Serviceinformationen von einer externen Serverstruktur 42 abzurufen und/oder an diese zu übertragen.

Insbesondere ist denkbar, dass durch das Lesen des maschinenlesbaren Codes 34 Adressinformationen, beispielsweise eine URL, an das Endgerät 36 übertragen werden. Durch Kommunikation mit der Serverstruktur 42 kann das Endgerät 36 dann die entsprechende URL öffnen und auf weiterführende Informationen, beispielsweise auf einen digitalen Zwilling 44 des Geräts 10, zugreifen und diese abrufen und/oder auf einem Bildschirm 46 anzeigen.

Im Ausführungsbeispiel ist der Prozessor 18 dazu ausgebildet und eingerichtet, den maschinenlesbaren Code 34 zeitlich begrenzt über das erste E-Ink Display 24 auszugeben. Ferner ist die Kommunikationseinheit 22 dazu ausgebildet und eingerichtet, die Verbindung 40 zeitlich begrenzt aufrechtzuerhalten.

Dadurch wird das Risiko reduziert, dass unberechtigte Personen Zugriff auf die Serviceinformationen erhalten, wodurch die Sicherheit des Geräts 10 und/oder ein Schutz vor Angriffen verbessert wird.

Das Gerät 10 wird im Ausführungsbeispiel mit einem erfindungsgemäßen Verfahren betrieben. Die Verfahrensschritte sind in Figur 2 schematisch dargestellt.

Das gezeigte Verfahren wird im beschriebenen Beispiel zur Wartung des IO-Link Systems genutzt, welches das Gerät 10 (den IO-Link Master) umfasst. Dies ist selbstverständlich nicht einschränkend zu verstehen. Insbesondere kann das Verfahren auch zu Wartungszwecken anderer Gerätetypen und/oder zur Informationsbeschaffung im Allgemeinen eingesetzt werden.

Bei der Wartung begutachtet ein Wartungspersonal (nicht gezeigt) zunächst das Gerät 10, insbesondere die menschenlesbar angezeigten Informationen auf zumindest einem der E-Ink Displays 24, 26.

In einem ersten Schritt S1 des Verfahrens liest der Prozessor 18 wenigstens eine Serviceinformation aus dem Speicher 20 aus. Die Serviceinformationen enthalten unter anderem weiterführende Adressinformationen, durch welche über die externe Serverstruktur 42 auch auf den digitalen Zwilling 44 des Geräts 10 zugegriffen werden kann.

Anschließend erzeugt der Prozessor 18 in einem zweiten Schritt S2 basierend auf den Serviceinformationen einen maschinenlesbaren Code 34.

Der maschinenlesbaren Code 34 wird in einem dritten Schritt S3 an das erste E-Ink Display 24 übermittelt.

In einem vierten Schritt S4 wird der maschinenlesbare Code 34 auf dem ersten E-Ink Display 24 angezeigt.

In einem fünften Schritt S5 des Verfahrens scannt das Wartungspersonal den maschinenlesbaren Code 34 mittels des Endgerätes 36. Im Ausführungsbeispiel sind die Serviceinformationen im maschinenlesbaren Code 34 enthalten. Sie gelangen durch das Lesen auf das Endgerät 36, werden dort decodiert und anschließend auf dem Bildschirm 46 angezeigt, beispielsweise in Textform.

Alternativ oder zusätzlich kann auch vorgesehen sein, dass das Endgerät 36 durch das Lesen des maschinenlesbaren Code 34 dazu veranlasst wird, die bereits beschriebene Verbindung 40 mit dem Gerät 10 herzustellen. Über die Verbindung 40 können die Serviceinformationen des Geräts 10 abgerufen und auf dem Bildschirm 46 angezeigt werden.

Im Ausführungsbeispiel stellt sich heraus, dass ein Fehler aufgetreten ist, der einen Austausch des Geräts 10 erforderlich macht.

Durch die abgerufenen Serviceinformationen und/oder aus dem digitalen Zwilling 44 sind die Betriebssoftwareversion und die Konfiguration des Geräts 10 bekannt, die zu Austauschzwecken auf ein entsprechendes Austauschgerät 48 (im Ausführungsbeispiel baugleich zu Gerät 10) übertragen werden können bzw. sollen.

Über die Verbindung 40 kann die Software mit der entsprechenden Konfiguration beispielsweise vom Gerät 10, insbesondere dem Speicher 20, zunächst auf das Endgerät 36 und von dort aus auf das Austauschgerät 48 übertragen bzw. kopiert werden. Alternativ kann die Software und/oder Konfiguration auch von der externen Serverstruktur 42 direkt auf das Austauschgerät 48 übertragen werden.

Anschließend kann das Gerät 10 durch das Austauschgerät 48 einfach ausgetauscht werden. Dadurch sind die zur Wartung benötigte Zeit und der Wartungsaufwand gering.

## Patentansprüche

1. Gerät mit zumindest einem Speicher (20), einem Prozessor (18) und einem E-Ink Display (24, 26), wobei der Prozessor (18) dazu ausgebildet und eingerichtet ist, Serviceinformationen aus dem Speicher (20) auszulesen, einen maschinenlesbaren Code (34) basierend auf den Serviceinformationen zu erzeugen und den maschinenlesbaren Code (34) an das E-Ink Display (24) zu übermitteln, sodass das E-Ink Display (24) den maschinenlesbaren Code (34) anzeigt, der, wenn er mit einem Endgerät (36) gelesen wird, das Endgerät (36) dazu veranlasst, die Serviceinformationen abzurufen.

2. Gerät nach Anspruch 1, wobei die Serviceinformationen Daten über eine Softwareversion und/oder über eine Konfiguration und/oder über einen am Gerät (10) aufgetretenen Fehler und/oder über eine Betriebszeit und/oder ein Herstellungsdatum des Geräts (10) umfassen.

3. Gerät nach Anspruch 1 oder 2, wobei der Prozessor (18) ferner dazu ausgebildet und eingerichtet ist, den maschinenlesbaren Code (34) zeitlich begrenzt über das E-Ink Display (24) anzuzeigen.

4. Gerät nach einem der vorhergehenden Ansprüche, ferner aufweisend eine digitale Kommunikationseinheit (22), wobei der maschinenlesbare Code (34), wenn er mit dem Endgerät (36) gelesen wird, das Endgerät (36) ferner dazu veranlasst, eine Verbindung (40) mit der Kommunikationseinheit (22) herzustellen.

5. Gerät nach Anspruch 4, wobei die Kommunikationseinheit (22) dazu ausgebildet und eingerichtet ist, die Verbindung (40) zeitlich begrenzt aufrechtzuerhalten.

6. Gerät nach Anspruch 4 oder 5, wobei die Kommunikationseinheit (22) eine Nahfeldkommunikationseinheit (38) ist, wobei der maschinenlesbare Code (34), wenn er mit dem Endgerät (36) gelesen wird, das Endgerät (36) ferner dazu veranlasst, Serviceinformationen und/oder eine Software und/oder eine Konfiguration mittels der Nahfeldkommunikationseinheit (38) von dem Speicher (20) an das Endgerät (36) und/oder von dem Endgerät (36) an den Speicher (20) zu übertragen.

7. Gerät nach einem der vorhergehenden Ansprüche, wobei der Prozessor (18) ferner dazu ausgebildet und eingerichtet ist, zumindest einen Teil der Serviceinformationen menschenlesbar über das E-Ink Display (24, 26) auszugeben.

8. Gerät nach einem der vorhergehenden Ansprüche, wobei der Prozessor (18) ferner dazu ausgebildet und eingerichtet ist, eine Softwareversion und/oder eine Konfiguration und/oder eine Anschlussbeschriftung (32) und/oder Betriebszeitinformationen menschenlesbar über das E-Ink Display (24, 26) auszugeben.

9. Verfahren zum Betreiben eines Geräts (10) mit zumindest einem Speicher (20), einem Prozessor (18) und einem E-Ink Display (24, 26) umfassend die Schritte:
- Auslesen von Serviceinformationen aus dem Speicher (20) mittels des Prozessors (18),
- Erzeugen eines maschinenlesbaren Codes (34) mittels des Prozessors (18) basierend auf den Serviceinformationen,
- Übermitteln des maschinenlesbaren Codes (34) an das E-Ink Display (24),
- Anzeigen eines maschinenlesbaren Codes (34) auf dem E-Ink Display (24);
- Lesen des maschinenlesbaren Codes (34) mittels eines Endgerätes (36), wobei das Endgerät (36) durch das Lesen die Serviceinformationen erhält und/oder dazu veranlasst wird, die Serviceinformationen abzurufen.

10. Verfahren nach Anspruch 9, wobei der maschinenlesbare Code (34), wenn er mit dem Endgerät (36) gelesen wird, das Endgerät (36) ferner dazu veranlasst, die abgerufenen Serviceinformationen auszugeben.

11. Verfahren nach Anspruch 9 oder 10, wobei der maschinenlesbare Code (34), wenn er mit dem Endgerät (36) gelesen wird, das Endgerät (36) ferner dazu veranlasst, auf einem Bildschirm (46) anzuzeigen.

12. Verfahren nach einem der Ansprüche 9 bis 11, wobei der maschinenlesbare Code (34), wenn er mit dem Endgerät (36) gelesen wird, das Endgerät (36) ferner dazu veranlasst, eine auf dem Gerät (10) befindliche Software und/oder eine Konfiguration und/oder die Serviceinformationen zu kopieren.

13. Verfahren nach einem der Ansprüche 9 bis 12, wobei der maschinenlesbare Code (34), wenn er mit dem Endgerät (36) gelesen wird, das Endgerät (36) ferner dazu veranlasst, eine auf dem Gerät (10) befindliche Software und/oder eine Konfiguration und/oder die Serviceinformationen auf ein Austauschgerät (48) zu kopieren.

14. Verfahren nach einem der Ansprüche 9 bis 13, wobei die Serviceinformationen vom Gerät (10) selbst und/oder aus einer externen Serverstruktur (42) abgerufen werden.

15. Verfahren nach einem der Ansprüche 9 bis 14, wobei der maschinenlesbare Code (34), wenn er mit dem Endgerät (36) gelesen wird, das Endgerät (36) ferner dazu veranlasst, einen digitalen Zwilling (44) des Geräts (10) abzurufen und/oder anzuzeigen.
